# EUROPÄISCHE PATENTSCHRIFT

(11) **EP 0 909 692 B1**
(45) Veröffentlichungstag und Bekanntmachung des Hinweises auf die Patenterteilung: **23.02.2005**
(21) Anmeldenummer: 98250319.5
(22) Anmeldetag: 10.09.1998
(51) Int. Cl.: B61L 27/00, H04L 29/06, H04L 9/00, B61L 21/00

(54) **Verfahren zum Abschotten sicherheitsrelevanter Datenverarbeitungsanlagen gegen Beeinflussungen aus anderen Datennetzen sowie hierzu geeignete Einrichtung**
Method for barricading security related data processing systems against influence of other data networks and apparatus for carrying out the method
Procédé pour barricader des systèmes de traitement de données relatifs à la sécurité intrinsique contre l'influence d'autres réseaux de données ainsi que dispositif approprié

(30) Priorität: 19.09.1997 DE 19742330
(43) Veröffentlichungstag der Anmeldung: 21.04.1999
(73) Patentinhaber: SIEMENS AKTIENGESELLSCHAFT, 80333 München (DE)
(72) Erfinder: Forstreuter, Horst, 38104 Braunschweig (DE)

(56) Entgegenhaltungen:
- WO-A-97/26731

## Beschreibung

Verfahren zum Abschotten sicherheitsrelevanter Datenverarbeitungsanlagen gegen Beeinflussungen aus anderen Datennetzen sowie hierzu geeignete Einrichtung

Die Erfindung bezieht sich auf ein Verfahren nach dem Oberbegriff des Patentanspruches 1 sowie auf eine dieses Verfahren anwendende Einrichtung.

Für die Bedienung von elektronischen Stellwerken werden Systeme eingesetzt, die die Prozeßzustände der Außenanlage grafisch auf Monitoren darstellen und Kommandos von Bedienern an die entsprechende Technik weiterleiten (Firmendruckschrift der Siemens AG, Bestellnr.: A19100/V100/B412 aus dem Jahre 1992 "Sicherheit für die Bahnen. Das elektronische Stellwerk"). Jedes System empfängt dazu Meldungen mindestens vom zugehörigen elektronischen Stellwerk sowie Meldungen einer Zugnummern-Meldeanlage, eines Zuglenksystems und von anderen Techniken. Für Stellwerksbedienungen mit Sicherheitsverantwortung werden auf Vollständigkeit und Korrektheit geprüfte Meldebilder benötigt und eine definierte Bedienprozedur abgewickelt (EP 0 120 339 B1).

Um Beeinflussungen von "außen" zu vermeiden, sind die Kommunikationswege zwischen den Komponenten zum Abwickeln der definierten Bedienprozeduren bislang "geschlossen", d. h. es besteht keine direkte Verbindung zu einem öffentlichen Datennetz. Wegen dieser geschlossenen Kommunikationswege ist es bislang unmöglich, verfahrensgesicherte Meldebilder oder Bedienabläufe von außen her durch intelligente Zugriffe (Hacker) zu verändern.

Im Gegensatz zur vorgenannten Konstellation eines in sich geschlossenen Datenverarbeitungssystems werden in Zukunft die betrieblichen Daten von z. B. Betriebsleitstellen, rechnergestützten Zugüberwachungen sowie Melde- und Überwachungssystemen aus Kostengründen mindestens zum Teil über öffentliche Datennetze geführt werden müssen. Um diese Daten in den geschützten Bereich elektronischer Stellwerke und Betriebsleitzentralen einzuspeisen, ist eine Kopplung des zu schützenden Bereiches mit dem öffentlichen Datennetz erforderlich. Diese Kopplung ist so auszuführen, daß von außen her keine sicherheitsrelevanten Handlungen im Stellwerk bzw. der Betriebsleitzentrale vorgenommen werden können.

Aufgabe der vorliegenden Erfindung ist es, ein Verfahren nach dem Oberbegriff des Patentanspruches 1 anzugeben, das in der Lage ist, sämtliche Beeinflussungen von außen her auf das zu schützende interne Datennetz einer Datenverarbeitungsanlage zu verhindern, die Auswirkungen auf die Sicherheit des von dort zu steuernden Prozeßgeschehens haben könnten; es ist ferner Aufgabe der Erfindung, eine Einrichtung anzugeben, mit der dieses Verfahren technisch umgesetzt werden kann.

Das erfindungsgemäße Verfahren ist durch die im Oberbegriff und im kennzeichnenden Teil des Patentanspruches 1 aufgeführten Merkmale gekennzeichnet. Es basiert auf der Überlegung, durch einen Filtervorgang alle Telegramme herauszufiltern und unwirksam zu machen, die nicht zuverlässig als signaltechnisch unbedenklich eingestuft werden können. Erfolgreiche Angriffe auf das Datennetz der sicherheitsrelevanten Datenverarbeitungsanlage sind dann nur möglich, wenn die Schaltmittel zum Realisieren der Filterfunktionen einschließlich der Schaltmittel für die Prüf- und Überwachungsprozeduren defekt sind oder wenn diese Filterfunktionen umgangen werden können. Dies wird durch die Erfindung dadurch vermieden, daß die von außen angelieferten Datentelegramme in einer ersten Einrichtung verschlüsselt und in einer zweiten, mit der ersten in Reihe geschalteten Einrichtung wieder entschlüsselt werden, und daß die in beiden Einrichtungen vorgesehenen Mittel zum Filtern der Datentelegramme und zur Funktionsprüfung der Filter zweikanalig ausgeführt sind und sich ständig auf Übereinstimmung vergleichen. Durch die Ver- und Entschlüsselung der Daten wird dafür gesorgt, daß Datentelegramme, die eine dieser Funktionen umgehen, spätestens von der sicherheitsrelevanten Datenverarbeitungsanlage zuverlässig erkannt werden können; das Vergleichen der in den einzelnen Einheiten implementierten Programme bzw. der über die Programme gebildeten Prüfdaten mit vorgegebenen Referenzwerten sowie mit den entsprechenden Daten und Referenzwerten der jeweils anderen Einheit deckt Fehlfunktionen innerhalb der Einheiten zuverlässig auf.

Vorteilhafte Ausgestaltungen des erfindungsgemäßen Verfahrens sind in den Unteransprüchen 2 bis 4 angegeben.

So soll nach der Lehre des Anspruches 2 bei nicht erfolgreich abgeschlossener Prüfung die Prüfung notfalls solange wiederholt werden, bis die Ausfalloffenbarungszeit abgelaufen ist; erst dann wird die Verbindung in das Datennetz der sicherheitsrelevanten Datenverarbeitungsanlage aufgetrennt. Diese Maßnahme stellt sicher, daß nur kurzzeitig vorhandene Störeinflüsse keine bleibenden Auswirkungen auf den Betrieb der sicherheitsrelevanten Datenverarbeitungsanlage haben.

Um zu verhindern, daß nach dem Auftrennen der Verbindung zum öffentlichen Datennetz durch Abschalten der beiden Filtereinrichtungen eine ungewollte Wiederinbetriebnahme dieser Filter stattfinden kann, wie es z. B. bei vorübergehendem Spannungsausfall denkbar wäre, sind nach der Lehre des Anspruches 3 bestimmte Maßnahmen zu treffen, die das Auftrennen der Verbindung zum öffentlichen Datennetz irreversibel machen. Für die Wiederinbetriebnahme der Einrichtungen sind bestimmte Bedienungshandlungen erforderlich. Bleiben diese Bedienungshandlungen aus, so wird durch einen Sicherungsalgorithmus dafür gesorgt, daß die in beiden Einheiten verfügbaren Daten voneinander verschieden sind, so daß der Vergleichsvorgang über die in beiden Einheiten implementierten Programme und unveränderlichen Daten nicht positiv abgeschlossen werden kann. Nach einer in Anspruch 4 angegebenen besonders vorteilhaften Ausgestaltung des erfindungsgemäßen Verfahrens sind die Maßnahmen zum Wiederanlaufen und zum Betrieb der beiden Einheiten sowohl von der Mitwirkung eines Bedieners als auch von einer in den Einheiten verankerten Logik abhängig zu machen, so daß eine unbeabsichtigte Wiederinbetriebnahme der Einheiten und ein unbeabsichtigter Betrieb der Einheiten zuverlässig auszuschließen ist.

Eine Einrichtung zur Umsetzung des erfindungsgemäßen Verfahrens in ein geeignetes technisches Gebilde ist im Anspruch 5 angegeben; vorteilhafte Ausgestaltungen und Weiterbildungen dieser Einrichtung finden sich in den Ansprüchen 6 bis 18.

In die Funktionsprüfung der technischen Komponenten der Einrichtung sind nach der Lehre des Anspruches 6 diejenigen Komponenten einbezogen, die am Filtervorgang selbst und an der Modifizierung von Daten zu Sicherungszwecken beteiligt sind; es sind dies die in den Einheiten implementierten Programme und unveränderlichen Daten, die jeweils mit Referenzdaten oder mit eigenständig ermittelten Daten auf Übereinstimmung zu prüfen sind.

Aus Redundanzgründen können nach der Lehre des Anspruches 7 verdoppelte Einheiten zur seriellen Behandlung einlaufender Telegramme vorgesehen sein, wobei diese Systeme nach den Ansprüchen 8 und 9 getrennte Schnittstellenbaugruppen aufweisen, die ggf. noch an unterschiedliche Übertragungsprotokolle angepaßt sein können. Hierdurch wird eine ungewollte Kopplung der redundaten Systeme ausgeschlossen.

Nach der Lehre des Anspruches 10 sollen sich die Einheiten unabhängig voneinander auf das Vorliegen der vorgegebenen Prüfbedingungen überwachen und hierzu von der jeweiligen Partnereinheit entsprechende Daten abfordern; die Prüfvorgänge laufen zyklisch ab und müssen innerhalb einer bestimmten Ausfalloffenbarungszeit positiv abgeschlossen sein. Nach der Lehre des Anspruches 11 können die einzelnen Einheiten neben den für sie geltenden Referenzwerten auch von diesen verschiedene Referenzwerte der anderen Einheit enthalten und diese dann zu Prüfzwecken an die jeweils andere Einheit übermitteln. Durch diese Maßnahmen können unterschiedliche Projektierungsdaten in beiden Einheiten, z.B. durch unterschiedliche Kommunikationsdienste beider Einheiten, für die Funktionsprüfung der Einheiten berücksichtigt werden..

Nach der Lehre des Anspruchs 12 sollen die zwischen den Einheiten übermittelten Anforderungen und Prüfergebnistelegramme mit bestimmten Kennungen versehen sein, die eine eindeutige Zuordnung der jeweils zusammengehörenden Daten ermöglichen.

Wenn nach der Lehre des Anspruches 13 das Nachtriggern eines Timers davon abhängig gemacht ist, daß die zugehörige Einheit innerhalb einer bestimmten zulässigen Zeit von der jeweiligen Nachbareinheit einen Prüfanstoß erhält, ist sichergestellt, daß sich auch die jeweils andere Einheit einer Funktionsprüfung unterzieht und der zugehörige Timer zur Begrenzung der Ausfalloffenbarungszeit aufgezogen wird. Das gemeinsame Abspeichern eines Freigabeschlüssels und einer diesen Freigabeschlüssel modifizierenden exklusiven Kennung in einem flüchtigen Speicher gemäß Anspruch 14 führt dazu, daß für beide Einheiten in diesem flüchtigen Speicher unterschiedliche Daten hinterlegt sind. Werden diese Daten durch irgendwelche Vorgänge gelöscht, so werden wegen des Zurückrechnens unterschiedlicher exklusiver Kennungen für beide Einheiten unterschiedliche Prüfdaten generiert, was durch Datenvergleich der beiden Einheiten feststellbar ist und zur Unterbrechung der Verbindung zum öffentlichen Datennetz führt.

Die nach der Lehre des Anspruchs 15 vorgesehene Unterrichtung der jeweils angeschlossenen Netze soll dort das Erkennen der eingetretenen Störung ermöglichen mit der Option, die Störungsbeseitigung zu veranlassen.

Durch die Verwendung getrennter Netzwerkkarten nach der Lehre des Anspruches 16 für die einzelnen Einheiten ist eine Entkopplung dieser Einheiten gegeben. Wenn nach der Lehre des Anspruches 17 eine mindestens mengenmäßige Bewertung der angelieferten, als nicht sicherheitskritisch erkannten Telegramme vorgenommen wird, ist es möglich, rechtzeitig vor dem Vollaufen der Speicher der sicherheitsrelevanten Datenverarbeitungsanlage den weiteren Zulauf von Datentelegrammen zu unterbinden. Durch diese Maßnahme wird erreicht, daß durch äußere, nicht sicherheitsrelevante Vorgänge die Verfügbarkeit der Datenverarbeitungsanlage nicht unter einen kritischen Wert abgesenkt werden kann; solche sicherheitsunkritischen Datentelegramme könnten ebenfalls von einer nichtautorisierten Quelle, z. B. von einem Hacker, stammen mit dem Ziel, die Datenverarbeitung in der sicherheitsrelevanten Datenverarbeitungsanlage zu blockieren.
Das Führen einer Fehlermeldedatei gemäß Anspruch 18 macht es möglich, aus der zeitlichen Häufung von Telegrammzurückweisungen auf etwaige unberechtigte Zugriffsversuche zu schließen.

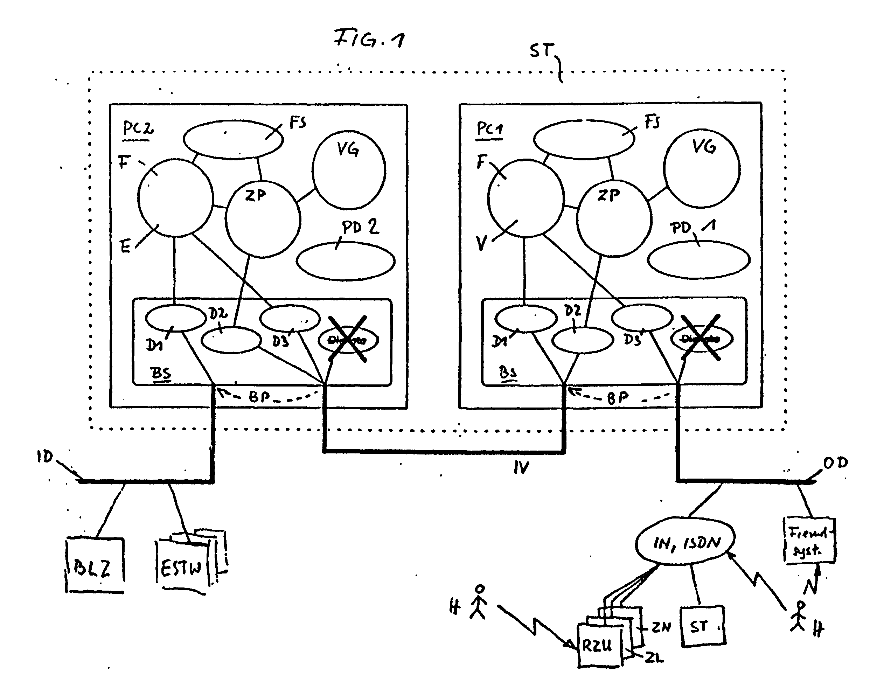

Die Erfindung ist nachstehend unter Bezugnahme auf die Zeichnung näher erläutert. Die Zeichnung zeigt schematisch eine Betriebsleitzentrale BLZ zur Steuerung des Bahnverkehres in einem Streckenbereich eines Bahnnetzes. Die Betriebsleitzentrale steht über ein internes Datennetz ID in Verbindung mit elektronischen Stellwerken ESTW, die von Bedienern z.B.aus der Betriebsleitzentrale heraus gesteuert werden können. Hierzu werden bestimmte Datentelegramme aus der Betriebsleitzentrale an die elektronischen Stellwerke übermittelt, die diese Telegramme dann in Stellanweisungen für die Fahrwegelemente der Außenanlage umsetzen. Die elektronischen Stellwerke garantieren dabei die Sicherheit des Bahnbetriebes, indem sie dafür sorgen, daß keine sich ausschließenden Fahrstraßen gestellt werden und daß alle in eine Fahrstraße unmittelbar oder mittelbar einbezogenen Fahrwegelemente auf ihren Freiund Besetztzustand überwacht werden. Die elektronischen Stellwerke ihrerseits unterrichten die Betriebsleitzentrale vom Zustand der von ihnen gesteuerten Prozeßelemente.

Für bestimmte Störsituationen ist vorgesehen, daß von der Betriebsleitzentrale aus unter Berücksichtigung bestimmter Sicherungsmaßnahmen an den Sicherungsfunktionen der Stellwerke vorbei auf einzelne Fahrwegelemente eingewirkt werden kann. Das kann z. B. dann nötig werden, wenn infolge einer fehlerhaften Freimeldung einzelne Gleisabschnitte besetzt gemeldet werden, obgleich sie tatsächlich längst freigefahren wurden. In diesem Fall kann ein Fahrdienstleiter in der Betriebsleitzentrale die betreffenden Gleisabschnitte durch Absetzen eines entsprechenden Kommandotelegrammes hilfsweise freimelden. Der Fahrdienstleiter muß die Verantwortung für die Zulässigkeit dieser Maßnahme übernehmen, was zu diesem Zweck auch dokumentiert wird. Weiterhin sind auch Störungen an Lichtsignalen denkbar, durch die sich dort keine Regelfahrtbegriffe mehr anschalten lassen. Ist die Anschaltung solcher Fahrtbegriffe zulässig, so kann der Fahrdienstleiter an dem oder den betroffenen Lichtsignalen einen Ersatzsignalbegriff anschalten und damit das Passieren eines Zuges an einem Halt zeigenden Signal gestatten. Auch dieser Vorgang liegt in der Verantwortung des Fahrdienstleiters, und seine Zulässigkeit wird vom Stellwerk nicht mehr geprüft.

Solange die Betriebsleitzentrale und die von ihr gesteuerten Stellwerke über ein nach außen abgeschottetes Datennetz ID miteinander kommunizieren, können Angriffe auf die Sicherheit und Verfügbarkeit des Bahnbetriebes weitgehend ausgeschlossen werden. Anders ist es, wenn die Betriebsleitzentrale und die Stellwerke mit Komponenten zusammenwirken sollen, die an öffentliche Datennetze angeschlossen sind. Solche Kopplungen wird es in Zukunft geben, weil die Bahnen aus Kostengründen mindestens bestimmte Daten ausschließlich oder optional über Personalcomputer und Workstations beziehen werden, die im signaltechnischen Sinne nicht sicher sind und möglicherweise auch noch in Verbindung stehen zu weiteren, völlig unbekannten Fremdsystemen, die ihrerseits evtl. Verbindungen zu öffentlichen Netzen haben. Solche nicht sicherungstechnischen Rechner können z. B. für die Rechnerzugüberwachung RZÜ, die Zuglenkung ZL und die Zugnummernmeldung ZN verwendet sein, die direkt keinen Einfluß haben auf die Sicherheit von elektronischen Stellwerken, sondern allenfalls auf deren verfügbarkeit, wenn nämlich infolge fehlerhafter Meldungen von dort ein Zug umgelenkt wird. Dieses Umlenken erfolgt aber regelmäßig in Verantwortung eines elektronischen Stellwerkes, das die Zulässigkeit der Steueranweisung prüft und damit die Sicherheit des Bahnbetriebes garantiert. Desgleichen wird es in Zukunft Störungsmeldungen ST aus anderen Stellwerken heraus oder von den einzelnen Prozeßelementen geben, die z. B. über das integrierte Netz der Bahn IN oder ISDN auf öffentlichen Datennetzen zur Verfügung gestellt werden. Auf diese öffentlichen Datennetze haben beliebige weitere Fremdsysteme Zugriff, deren Ausrichtung und Beschaffenheit niemand kennt. Auf das öffentliche Datennetz haben auch Angreifer (Hacker)H Zugriff, die es aus welchen Gründen auch immer darauf abgesehen haben, in geschützte Datennetze einzudringen und dort für Störungen zu sorgen. Zum Erkennen solcher Störer reicht es nicht aus, die dem zu schützenden Datennetz zugeführten Datentelegramme nach ihrer Quelle hin zu analysieren und nur solche Telegramme passieren zu lassen, die aus autorisierten Diensten stammen, weil die Möglichkeit nicht auszuschließen ist, daß die Störer sich mit ihren Programmen und Daten bereits in diesen autorisierten Diensten eingenistet haben oder einnisten werden, und dann nicht mehr zuverlässig als Störer erkennbar sind.

Aus dem Stand der Technik (EP 0 120 339 B1) ist es bekannt, zur Ausführung anliegende Prozeßsteueraufträge nach ihrer Struktur her zu klassifizieren in solche, die Regelbedienungen betreffen und solche, die Hilfsbedienungen betreffen. Aufträge für Regelbedienungen sind als sicherungstechnisch unbedenklich zu bewerten, weil sie auf das Stellwerk einwirken, das seinerseits die Sicherheit für die Ausführung der Bedienung übernimmt; Hilfsbedienungen dagegen sind sicherheitsrelevante Aufträge, die am Stellwerk vorbei auf die Au-Benanlage wirken. Die Erfindung macht sich die an sich bekannte Unterscheidung von Telegrammen in solche mit sicherungstechnisch relevantem Inhalt und solche mit sicherungstechnisch unbedenklichem Inhalt zu Nutze, um zu verhindern, daß von außen her durch Unbefugte auf die Prozeßelemente der Außenanlage eingewirkt werden kann: es werden nur solche Telegramme von außen her auf das zu schützende Datennetz der sicherheitsrelevanten Datenverarbeitungsanlage zugelassen, die als sicherungstechnisch unbedenklich einzustufen sind. Damit können von außen kommende gewollte oder ungewollte Beeinflussungen theoretisch keine Auswirkungen auf sicherheitskritische Anwendungen haben. Dies gilt aber nur solange als die von außen anliegenden Telegramme tatsächlich auch hinsichtlich ihrer Struktur zuverlässig in sicherheitskritische und unbedenkliche Telegramme unterschieden werden können. Das ist zumindest dann nicht der Fall, wenn die Datentelegramme die Möglichkeit haben, an der Bewertungseinrichtung vorbei in Richtung auf das geschützte Datennetz weiterzugelangen und/oder wenn die für die Bewertung der Telegramme vorgesehenen Einrichtungen nicht voll funktionstüchtig sind.

Um ein solches Fehlverhalten auszuschließen und etwaige Störungen zu erkennen, sieht die Erfindung mehrere Maßnahmen vor, deren gemeinsame Anwendung aber erst den erstrebten Zweck erreichbar werden läßt.

Zum Abschotten des zu schützenden Datennetzes der sicherheitsrelevanten Datenverarbeitungsanlage dient ein sog. security translator System ST zwischen dem zu schützenden Datennetz und dem öffentlichen Datennetz, an das eine Reihe autorisierter Dienste aber auch unbekannte Fremdsysteme angeschlossen sind. Das security translator system besteht aus zwei im wesentlichen gleichen Datenverarbeitungseinrichtungen PC1 und PC2 (security translator), die über eine interne Punkt-zu-Punkt-Verbindung IV in Reihe geschaltet sind. Die beiden security translators sind in marktgängiger Technik realisiert und beispielsweise als workstations oder personal computer ausgebildet; sie können aber auch in einer Sicherheitstechnik realisiert sein, wie sie speziell für die Steuerung sicherheitsrelevanter Prozesse in der Eisenbahnsignaltechnik verwendet wird. Die Betriebssysteme der beiden security translators beinhalten herstellerseitig keine Kommunikationsdienste (diese Dienste werden erst anwenderseitig ergänzt) oder aber aus den herstellerseitig vorgesehenen Kommunikationsdiensten werden alle anwenderseitig nicht benötigten Dienste entfernt. So weiß der Anwender über die tatsächlich vorhandene Dienste Bescheid, ohne befürchten zu müssen, daß es in seinem security translator systeme Dienste gibt, die ihm unbekannt sind und deren Funktion er auch nicht kennt. Solche Dienste würden das Betriebssystem lediglich aufblähen und zu möglicherweise nicht vorhersehbaren Reaktionen der zugehörigen security translators führen. In dem angenommenen Ausführungsbeispiel sind für die Betriebssysteme BS der beiden security translators PC1 und PC2 drei Kommunikationsdienste D1 bis D3 vorgesehen und implementiert, während alle übrigen Dienste eliminiert sind; diese eliminierten bzw nicht vorhandenen Dienste sind durch ein Kreuz über das ellipsenförmige Symbol für die weiteren Dienste gekennzeichnet.

Jeder security translator PC1, PC2 beinhaltet eine Filterfunktion F, in der die Struktur der aus dem öffentlichen Datennetz über die Kommunikationsdienste D1 bis D3 angelieferten Datentelegramme z. B. anhand von in Dateien abgelegten Telegrammustern bewertet wird. Die Filterfunktionen F lassen nur solche Telegramme passieren, die zuverlässig als signaltechnisch unbedenklich erkannt werden; solche Daten beziehen sich insbesondere auf dispositive Maßnahmen wie die Bereitstellung bestimmter Ressourcen, Fahrplanangaben, Zugnummern und ähnliches. Alle Datentelegramme, die nicht zuverlässig als signaltechnisch unbedenklich erkannt werden, werden gelöscht. Solche Daten können tatsächlich sicherheitskritische Daten sein, aber auch sicherheitsunkritische Daten, die nur nicht als solche erkannt wurden. In der Gegenrichtung vom geschützten Datennetz der Datenverarbeitungsanlage stammende Datentelegramme passieren die beiden security translators ungefiltert und gelangen auf das öffentliche Datennetz.

Weil angenommen werden muß, daß Datentelegramme die Filterfunktion F z. B. des security translators PC1 durch eine Art Bypass BP umgehen könnten, ohne daß die Filterfunktion selbst ausfällt, sieht die Erfindung mehrere Maßnahmen zum Ausschließen bzw. Erkennen solcher Vorgänge vor. Diese Maßnahmen bestehen zunächst einmal in der bereits geschilderten Verdoppelung der zwischen das zu schützende und das öffentliche Datennetz einzufügenden security translator PC1, PC2 und ihre Reihenschaltung über eine interne Punkt zu Punkt-Verbindung IV. Die von außen zugeführten Datentelegramme werden nicht nur hinsichtlich ihrer Struktur analysiert und gefiltert, sondern auch mehrfach verändert. So beinhaltet der in Datentransferrichtung erste security translator PC1 eine Verschlüsselungsfunktion V und der ihr nachgeschaltete security translator PC2 eine Entschlüsselungsfunktion E, in der die Verschlüsselung des ersten security translators PC1 wieder rückgängig gemacht wird. Durch diese Maßnahme und die Punkt-zu-Punkt-Verbindung der beiden security translators wird erreicht, daß von außen zugeführte Daten, die entweder über einen Bypass BP vom Eingang auf den Ausgang des einen oder anderen security translators koppeln, entweder nur verschlüsselt oder nur entschlüsselt werden. Solche Telegramme sind von ihrem Inhalt nicht zu bewerten und werden von der zu schützenden Datenverarbeitungsanlage verworfen. Versagt die Verschlüsselungs- oder die Entschlüsselungsfunktion in dem einen oder anderen security translator, so kommt es ebenfalls zu entsprechenden wirren Telegrammen, die spätestens von der sicherheitsrelevanten Datenverarbeitungsanlage erkannt und eliminiert werden können.

Um zu erkennen, ob die in den security translator PC1 und PC2 implementierten Filterfunktionen ordnungsgerecht realisiert werden, werden die Filterprogramme der Filterfunktionen in beiden Datenverarbeitungseinrichtungen einer zyklischen Prüfung ZP unterzogen. Durch diese zyklische Prüfung sollen Fehlfunktionen aufgedeckt werden. Solche Fehlfunktionen lassen sich allein durch die Reihenschaltung der Filterfunktionen nicht aufdecken; würde z. B. die Filterfunktion des security translators PC2 ausfallen, so würde die des security translators PC1 diesen Fehler überdecken, weil sie die Analyse der zur Bewertung anstehenden Telegramme zuerst vornehmen würde. Der eingetretene Fehler würde dann nicht erkannt werden und ein in der Filterfunktion des security translators PC1 zu einem späteren Zeitpunkt auftretender Fehler bliebe möglicherweise unerkannt. Damit wäre die Möglichkeit gegeben, daß tatsächlich gefährliche Kommandos von außen her auf das geschützte Datennetz der sicherheitsrelevanten Datenverarbeitungsanlage gelangen könnten.

Durch die zyklischen Prüfungen in beiden Datenverarbeitungseinrichtungen PC1 und PC2 werden die Filterprogramme geprüft. Es werden dabei über die Programme nach einem Algorithmus Prüfdaten gebildet und diese Prüfdaten werden intern in den einzelnen Datenverarbeitungseinrichtungen mit in einem Referenzspeicher abgelegten Referenzprüfdaten verglichen. Dies geschieht zum ersten Male bei der Inbetriebnahme der sicherheitsrelevanten Datenverarbeitungsanlage und später bei jedem Neustart der Anlage. Während des Betriebes werden die Filterfunktionen der beiden Datenverarbeitungseinrichtungen ebenfalls zyklisch geprüft, wobei neben der internen Prüfung mit einem in den einzelnen Datenverarbeitungseinrichtungen hinterlegten Referenzdatum auch eine gegenseitige Überprüfung der Filterfunktionen beider security translators vorgesehen ist. Zu diesem Zweck stößt z. B. der security translator PC1 über den Datendienst D2 die zyklische Filterfunktionsprüfung im security translator PC2 an. Diese veranlaßt die Funktionsprüfung ihrer eigenen Filterfunktion und gibt die dabei gefundenen Prüfdaten und/oder die bei ihr abgespeicherten entsprechenden Referenzdaten über den Datendienst D2 an den abfordernde security translator PC1. Dieser vergleicht die übermittelten Ergebnistelegramme mit den eigenen Prüfdaten. Vergleicherfunktionen V in beiden security translators sorgen sowohl für den internen Vergleich von Prüfdaten mit Referenzdaten als auch für den externen Vergleich solcher Daten. Da das Ergebnis der Vergleichsvorgänge sicherheitsrelevant ist, müssen auch die Vergleichsfunktionen zyklisch geprüft werden. Dies wird ebenfalls über die zyklischen Prüfungen ZP bewerkstelligt. Bei diesen zyklischen Prüfungen werden auch über die Vergleicherprogramme Prüfdaten gebildet, die mit internen Referenzwerten, aber auch mit den entsprechenden Prüfdaten der jeweiligen Partnerdatenverarbeitungseinrichtung auf Übereinstimmung zu prüfen sind.

Die zulässige Zyklusfolgezeit für die zyklischen Prüfungen ZP bestimmt sich z. B. aus der durch die Hardware der verwendeten Datenverarbeitungseinrichtungen bestimmten Fehleroffenbarungszeit MTBF, die z. B. um den Faktor 1000 verringert wird und so die zulässige Ausfalloffenbarungszeit jedes security translators angibt. Ein typischer Wert für solche Ausfalloffenbarungszeit liegt bei einer Stunde, d. h. spätestens jede Stunde muß ein Prüfvorgang zur Funktionsprüfung der Filterund Vergleichsfunktionen positiv abgeschlossen sein. Ist ein solcher Vergleich positiv abgeschlossen worden, wird ein zu Beginn der Funktionsprüfung im betreffenden security translator aufgezogener Timer, dessen Schaltzeit der vereinbarten Ausfalloffenbarungszeit entspricht, zurückgestellt und beginnt erneut zu laufen. Führt ein Prüfvorgang nicht zu einem positiven Ergebnis, so wird der Timer auch nicht zurückgestellt. Statt dessen wird erneut der Versuch unternommen, zu einem positiven Prüfergebnis zu kommen, indem erneut die aktuellen Prüfdaten über die Filter- und die Vergleichsprogramme gebildet und mit den jeweils zu vergleichende Prüf- oder Referenzdaten verglichen werden. Kommt innerhalb der zulässigen Ausfalloffenbarungszeit kein positives Vergleichsergebnis zustande, so laufen ggf. zeitlich versetzt in beiden security translators die Timer ab und veranlassen, daß der jeweils zugehörige security translator irreversibel abschaltet; hierauf wird später noch näher eingegangen.

In die zyklische Prüfung zum Aufdecken von Fehlfunktionen innerhalb der einzelnen security translators soll neben der Prüfung der Filter und Vergleichsprogramme auch die Prüfung bestimmter in den einzelnen security translators hinterlegter unveränderlicher Parameter einbezogen sein. Diese Parameter stellen Projektierungsdaten PD1 bzw. PD2 dar, die in zugehörigen Speichern der security translators hinterlegt sind. Sie können für beide security translators verschieden sein, weil z. B. die Kommunikationsdienste der beiden Betriebssysteme unterschiedlich ausgelegt sein können. Weichen diese Projektierungsdaten tatsächlich voneinander ab, so sind in beiden security translators die Projektierungsdaten beider security translators zu hinterlegen, wobei z. B. dann, wenn der security translator PC2 Referenzdaten aus dem security translator PC1 abruft, dort die für den security translator PC2 hinterlegten Referenzdaten übermittelt werden und umgekehrt.

Jeder der beiden security translators PC1 und PC2 fungiert als Master-security translator zum Anstoß der zyklischen Prüfung seiner Programme und unveränderlichen Daten. Kommt ein positiver Vergleich der über die Programme und unveränderlichen Daten gezogenen Prüfdaten innerhalb der Ausfalloffenbarungszeit nicht zustande, so liegt in einem der security translators eine Fehlfunktion vor. Es ist damit nicht sichergestellt, daß der fehlerhaft arbeitende security translator sich aufgrund des detektierten Fehlers tatsächlich abschaltet. Durch einen noch zu erläuternden Mechanismus wird jedoch dafür gesorgt, daß der Partner-security translator, der annahmegemäß noch funktionsfähig sein soll, von dem Auftreten des Funktionsfehlers unterrichtet wird. Dieser security translator schaltet sich zuverlässig ab und verhindert damit, daß Daten vom offenen Datennetz auf das geschützte Datennetz gelangen können.

Der positive Abschluß der zyklischen Prüfung eines security translators kann außer von der Prüfung der Filter- und Vergleichsprogramane und der unveränderlichen Daten davon abhängig gemacht sein, daß innerhalb der Ausfalloffenbarungszeit vom jeweiligen Partner-security translator ein Anstoß zum Ermitteln und Übertragen von Prüf - oder Referenzdaten empfangen wurde. Unterläßt ein security translator diesen Anstoß, z. B. weil sein Timer nach Ablauf der Ausfalloffenbarungszeit abgelaufen ist, so erkennt der Partner-security translator dies an dem Ausbleiben der entsprechenden Prüfaufforderung und schaltet sich daraufhin selbst ab.

Eine vorteilhafte Ausgestaltung der erfindungsgemäßen security translator sieht vor, daß die Datenverarbeitungseinrichtungen für die Prüfung ihrer Programme und unveränderlichen Daten jeweils eine mit einem Zeitstempel, mit einer nach einer vorgegebenen Gesetzmäßigkeit ermittelten Nummer oder mit einer Zufallszahl versehene Anforderung an den jeweiligen Partner-security translator übermitteln und daß dieser die jeweils übermittelte Kennung zusammen mit den angeforderten Prüf- oder Referenzdaten an den anfordernden security translator übermittelt. Dort ist durch Bewertung der Kennungen, die zusammen mit der Anfrage und der Anwort auf die Anfrage übermittelt wurden, eine eindeutige Zuordnung der Prüf- und Referenzdaten möglich.

Wenn sich ein oder beide security translators eines security translator systems im Störungsfall abgeschaltet haben, ist sicherzustellen, daß sie nicht wieder anlaufen können, ohne daß hierzu autorisiertes Personal den Neustart der security translators veranlaßt und damit die Wiederinbetriebnahme des security translator systems bewußt zuläßt. Hierzu sollten mindestens die beiden security translators des security translator systems in einem Raum untergebracht sein, der einer besonderen Zugangsberechtigung bedarf. Ein solcher Raum schließt auch andere Manipulationen an dem security translator system aus. Für die Inbetriebnahme des security translator systems hat der Bediener an beiden security translators PC1 und PC2 eine gesonderte Bedienungshandlung vorzunehmen, nämlich eine bestimmte Kennung einzugeben, die nachfolgend als Freigabeschlüssel FS bezeichnet ist. Diese Kennung besteht z. B. aus einem mehrere Bits umfassende Byte, das für beide security translators gleich ist, oder aus mehreren Bytes. Das Vorhandensein des Freigabeschlüssels und damit die Zulassung zum Betrieb wird von beiden security translators im Rahmen der zyklischen Prüfung ständig geprüft, indem die Daten des Freigabeschlüssels in bestimmter Weise in die Prüfdaten der Filter und Vergleichsprogramme sowie der unveränderlichen Daten einbezogen werden. Schaltet sich einer der security translators im Störungsfall ab, so wird der in seinem flüchtigen Speicher eingeschriebene Freigabeschlüssel gelöscht. Damit wird dem betrachteten security translator die Betriebsgenehmigung entzogen, weil die entsprechenden Angaben in den Prüfdaten verschwunden sind. Da sich aber beide security translators störungsbedingt abschalten und ihren Freigabeschlüssel löschen könnten, ist das Vorhandensein übereinstimmender Freigabeschlüssel allein noch nicht ausreichend, um ein unbeabsichtigtes Wiederanlaufen des security translator systems zu verhindern. Auf der einen Seite müssen die Freigabeschlüssel in beiden security translators identisch sein, damit bei der zyklischen Prüfung übereinstimmende Prüfdaten für die Programme und die Projektierungsdaten gebildet werden können; auf der anderen Seite müssen diese Daten aber verschieden sein, weil es sonst zu einer selbsttätigen Aktivierung des security translator systems kommen könnte. Die Erfindung sieht deshalb vor, den vom Bediener jeweils zu hinterlegenden identischen Freigabeschlüssel durch eine Automatik bei der Eingabe bzw. Abspeicherung mit einer exklusiven Kennung für den betreffende security translator zu verbinden, beispielsweise mit einer Rechnernummer, die für beide security translators verschieden ist. Damit unterscheiden sich die in dafür vorgesehenen Speichern hinterlegten, durch die Kennungen modifizierten Freigabeschlüssel markant voneinander. Bei der Verarbeitung des Freigabeschlüssels zum Bilden der Prüfdaten über die Programme und die unveränderlichen Daten werden durch die security translators aus den modifizierten Freigabeschlüsseln die jeweils beigefügten exklusiven Kennungen wieder herausgerechnet, so daß bezüglich der Prüfdaten wieder übereinstimmende Freigabeschlüssel vorliegen. Für beide security translators liegen aber nur dann übereinstimmende, in die zyklische Prüfung einzubeziehende Freigabeschlüssel vor, wenn der Bediener tatsächlich beide Freigabeschlüssel übereinstimmend eingegeben hat, diese Freigabeschlüssel durch die exklusiven Kennungen automatisch modifiziert wurden und anschließend diese Kennungen durch die Automatik wieder entfernt wurden. Fehlt bei einer oder bei beiden security translator der vom Bediener eingegebene Freigabeschlüssel oder die exklusive Kennung, so leiten die security translators durch Rückrechnen der exklusiven Kennungen aus den Bingabeschlüsseln, selbst wenn die Eingabeschlüssel gelöscht sind, also nicht vorliegen, unterschiedliche Daten heraus und beziehen die Ergebnisse dieser Rechenoperationen in die zyklischen Prüfungen ein. Damit kann es nicht zu einem positiven Abschluß der zyklischen Prüfungen kommen und die Verbindung zwischen dem zu schützenden Datennetz und dem öffentlichen Datennetz bleibt aufgetrennt. Das Ablegen der vom Bediener vorgegebenen Freigabeschlüssel zusammen mit den exklusiven Kennungen in einem flüchtigen Speicher hat durch die unterschiedlichen Darstellungen der so gebildeten modifizierten Freigabeschlüssel darüber hinaus den Vorteil, daß durch äußere Einflüsse bedingte Datenverfälschungen in beiden Speichern in unterschiedlicher Weise zur Wirkung kommen, indem sie dort unterschiedliche Bits überschreiben bzw. löschen. Auch bei einer vollständigen Löschung der Freigabeschlüssel und/oder der exklusiven Kennungen kommt es durch die in den beiden security translators stattfindende Rückrechnung der exklusiven Kennungen aus den aus den Speichern entnehmbaren Daten zu unterschiedlichen Prüfdaten in beiden security translators und damit zu einer Abschottung des geschützten Datennetzes gegenüber dem öffentlichen Datennetz.

Jeder security translator, der sich selbst durch Löschen des Eingabeschlüssels und/oder Abschalten der Stromversorgung abschaltet, ist dazu eingerichtet, entsprechende Störungsmeldungen entweder an das geschützte Datennetz oder an das öffentliche Datennetz zu übermitteln. Hierzu sind die beiden security translators über gesonderte Netzwerkkarten mit dem einen bzw. anderen Datennetz vollständig voneinander entkoppelt verbunden. Ferner ist es möglich, daß ein security translator eine entsprechende Störungsmeldung auch an den jeweiligen Partner-security translator übermittelt. Dies geschieht über die Punkt zu Punkt-Verbindung IV zwischen beiden security translators, die ihrerseits vollständig entkoppelt ist von den beiden Netzen, auf die die security translators wirken.

Von Vorteil kann es auch sein, wenn die Datenverarbeitungsanlage oder aber die security translators die ihnen zugeführten und als signaltechnisch unbedenklich eingestuften Telegramme mindestens mengenmäßig bewerten. Auf diese Weise kann rechtzeitig vor der Blockierung der Speicherfunktionen der Datenverarbeitungsanlage durch von außen aufgeschaltete Telegramme eine Entkopplung der beiden Netze vorgenommen werden, bevor die Ressourcen der sicherheitsrelevanten Datenverarbeitungsanlage erschöpft sind. Solche an sich signaltechnisch unbedenklichen Telegramme können ungewollt durch Fehladressierung, aber auch gewollt durch Hacker in die öffentlichen Netze eingespielt werden mit dem Hintergedanken, dann die sicherheitsrelevante Datenverarbeitungsanlage funktionsunfähig zu machen.

Die zeitliche Bewertung zurückgewiesener/gelöschter Telegramme macht es möglich, etwaige Hackerangriffe auf das zu schützende Datennetz zu erkennen und geeignete Gegenmaßnahmen zu ergreifen.

Aus Redundanzgründen kann es von Vorteil sein, neben einem ersten security translator system ein oder mehrere weitere solcher aus je zwei security translators bestehende security translator systems vorzusehen. Diese redundanten Systeme sind dann entweder einander parallel zu schalten, wobei durch eine geeignete Koordinierung sicherzustellen ist, daß nur eines der security translator systems wirksam ist, oder aber es gibt ein betriebsführendes translator system und ein Reserve-translator system, von denen das Reserve-translator system erst aktiv wird, wenn das betriebsführende translator system funktionsunfähig ist. Auf jeden Fall sind die security translators der redundant vorgesehenen security translator systems über gesonderte Schnittstellenbaugruppen an die beiden Datennetze anzuschließen, wobei diese Schnittstellenbaugruppen ggf. auch auf unterschiedliche Übertragungsprotokolle zum öffentlichen Datennetz abgestimmt sein können.

Das erfindungsgemäße Verfahren zum Abschotten sicherheitsrelevanter Datenverarbeitungsanlagen gegen ungewollte und unzulässige Beeinflussungen aus anderen Datennetzen heraus ist überall dort mit Vorteil anwendbar, wo eindeutig unterschieden werden kann zwischen Datentelegrammen mit sicherheitsrelevantem und mit nicht sicherheitsrelevantem Inhalt. Die geschützte Datenverarbeitungsanlage kann dabei zur Steuerung jedes beliebigen Prozesses verwendet sein.

## Patentansprüche

1. Verfahren zum Abschotten sicherheitsrelevanter Datenverarbeitungsanlagen gegen ungewollte und unzulässige Beeinflussung aus anderen Datennetzen heraus, mit denen die Datenverarbeitungsanlage über Kommunikationsdienste in Verbindung steht, durch Anwendung einer Filterfunktion, nach der alle Telegramme gelöscht werden, die nicht zweifelsfrei als signaltechnisch unbedenklich erkannt werden,
**gekennzeichnet durch** folgende Merkmale:
1) Die über die Kommunikationsdienste (D3) angelieferten Datentelegramme werden in mindestens zwei unabhängigen, der sicherheitsrelevanten Datenverarbeitungsanlage (BLZ) vorgeschalteten und in Reihe geschalteten Betrachtungseinheiten (PC1, PC2) gefiltert.
2) Die Telegramme werden in einer ersten Betrachtungseinheit (PC1) verschlüsselt (V) und in der in Datentransferrichtung folgenden zweiten Betrachtungseinheit (PC2) wieder entschlüsselt (E).
3) Über die in beiden Betrachtungseinheiten implementierten Programme (F, VG) und ggf. unveränderlichen Daten (PD1, PD2) werden mindestens mittelbar Prüfdaten gebildet und mit in den Betrachtungseinheiten hinterlegten Referenzdaten und/oder von der Partner-Betrachtungseinheit stammenden Prüf - und/oder Referenzdaten auf Übereinstimmung verglichen.
4) Wird eine Prüfungen nicht innerhalb einer definierten Ausfalloffenbarungszeit erfolgreich abgeschlossen, wird die Betrachtungseinheit, die das festgestellt hat, irreversibel abgeschaltet.

2. Verfahren nach Anspruch 1,
**dadurch gekennzeichnet,**
**daß** bei nicht erfolgreich abgeschlossener Prüfung die Prüfung ggf. mehrfach bis zum Ablauf der Ausfalloffenbarungszeit wiederholt wird.

3. Verfahren nach Anspruch 1 oder 2,
**dadurch gekennzeichnet,**
**daß** bei der Inbetriebnahme der Datenverarbeitungsanlage in beide Betrachtungseinheiten (PC1, PC2) eine Kennung (FS) als sogen. Freigabeschlüssel eingegebenen wird, deren Zahlenwert nach einem vorgegebenen Algorithmus in die Berechnung der Prüfdaten einfließt,
**daß** für die jeweils zusammenwirkenden Betrachtungseinheiten gleiche Freigabeschlüssel vergeben werden,
**daß** diese Freigabeschlüssel für jede Betrachtungseinheit mit einer exklusiven Kennung verknüpft werden,
**daß** für die gegenseitige Prüfung der Programme und ggf. unveränderlichen Daten die jeweils berücksichtigte exklusive Kennung aus den Prüfdaten wieder herausgerechnet wird und daß bei innerhalb der Ausfalloffenbarungszeit nicht erfolgreich abgeschlossener Prüfung der Freigabeschlüssel gelöscht wird.

4. Verfahren nach Anspruch 3,
**dadurch gekennzeichnet,**
**daß** die Eingabe der Freigabeschlüssel durch einen Bediener von Hand und das Einrechnen der jeweiligen exklusiven Kennung in sowie das Herausrechnen dieser Kennung aus dem durch eine Kennung modifizierten Eingabeschlüssel durch eine Automatik vorgenommen wird.

5. Einrichtung zur Durchführung des Verfahrens nach einem der Ansprüche 1 bis 4,
**dadurch gekennzeichnet,**
**daß** für die Betrachtungseinheiten (PC1, PC2) Datenverarbeitungseinrichtungen verwendet sind, deren Betriebssysteme herstellerseitig keine Kommunikationsdienste beinhalten und die erst anwenderseitig durch spezifizierte Kommunikationsdienste (D1 bis D3) ergänzt werden, oder deren Kommunikationsdienste mit Ausnahme bestimmter, vom Anwender auswählbarer Kommunikationsdienste eliminiert werden,
**daß** jede Datenverarbeitungseinrichtung Referenzspeicher für die über ihre Programme (F, VG) und ggf. unveränderlichen Daten (PD) gebildeten Prüfdaten sowie Einrichtungen zum Abfordern und Verarbeiten der Daten durch die Partner-Datenverarbeitungseinrichtung sowie zum Übermitteln solcher Daten an die Partner-Datenverarbeitungseinrichtung aufweist,
**daß** jede Datenverarbeitungseinrichtung eine Ver- bzw. Entschlüsselungseinrichtung (V, E) für die jeweils zugeführten Datentelegramme aufweist, die über eine nach außen abgetrennte interne Punkt-zu-Punkt-Verbindung (IV) miteinander kommunizieren und
**daß** jede Datenverarbeitungseinrichtung einen bei Inbetriebnahme und bei Neustart sowie bei erfolgreich abgeschlossener Prüfung der Programme und ggf. unveränderlichen Daten triggerbaren Timer aufweist, dessen Schaltzeit der zulässigen maximalen Zyklusfolgezeit der Prüfungen entspricht und der mit Ablauf der ihm eingeprägten Schaltzeit den Freigabeschlüssel (FS) löscht und die Abschaltung der zugehörigen Datenverarbeitungseinrichtung veranlaßt.

6. Einrichtung nach Anspruch 5,
**dadurch gekennzeichnet,**
**daß** die Programmprüfung (ZP) die zyklische Prüfung mindestens der Filter- und der Vergleichsfunktionen (F, VG) der einzelnen Datenverarbeitungseinrichtungen (PC1, PC2) beinhaltet.

7. Einrichtung nach Anspruch 5 oder 6,
**dadurch gekennzeichnet,**
**daß** aus Redundanzgründen jeweils mindestens zwei aus je zwei in Reihe geschalteten Datenverarbeitungseinrichtungen (PC1, PC2) bestehende Datenverarbeitungssysteme (ST) vorgesehen sind, die voneinander getrennt sind und eigenständig arbeiten und daß hinsichtlich der Weitergabe von Datentelegrammen in den geschützten Bereich der sicherheitsrelevanten Datenverarbeitungsanlage aus dem einen oder anderen System eine Koordinierung der Datenverarbeitungssysteme vorgesehen ist.

8. Einrichtung nach Anspruch 7,
**dadurch gekennzeichnet,**
**daß** jedes Datenverarbeitungssystem mindestens eine Schnittstellenbaugruppe zum Anschließen eines öffentlichen Datennetzes sowie eine eigene Schnittstellenbaugruppe zum Anschließen des geschützten Datennetzes der sicherheitsrelevanten Datenverarbeitungsanlage aufweist.

9. Einrichtung nach Anspruch 8,
**dadurch gekennzeichnet,**
**daß** zu den öffentlichen Netzen hin jeweils mehrere, ggf. auf unterschiedliche Übertragungsprotokolle abgestimmte unterschiedliche Schnittstellenbaugruppen vorgesehen sind.

10. Einrichtung nach einem der Ansprüche 5 bis 9,
**dadurch gekennzeichnet,**
**daß** jede der beiden Datenverarbeitungseinrichtungen als Master-Datenverarbeitungseinrichtung fungiert und die Prüfung ihrer Programme und ggf. unveränderlichen Daten anhand von selbst ermittelten oder bei ihr abgespeicherten und von der jeweiligen Partner-Datenverarbeitungseinrichtung erfragten Prüf- und/oder Referenzdaten veranlaßt.

11. Einrichtung nach Anspruch 10,
**dadurch gekennzeichnet,**
**daß** bei den einzelnen Datenverarbeitungseinrichtungen neben eigenen Referenzdaten auch möglicherweise abweichende Referenzdaten für die Partner-Datenverarbeitungseinrichtung hinterlegt sind, die bedarfsweise anstelle der eigenen Referenzdaten an die jeweils abrufende Datenverarbeitungseinrichtung zu übermitteln sind.

12. Einrichtung nach Anspruch 10 oder 11,
**dadurch gekennzeichnet,**
**daß** jede Datenverarbeitungseinrichtung für die Prüfung ihrer Programme und ggf. unveränderlichen Daten eine mit einem Zeitstempel, einer nach einer vorgegebenen Gesetzmäßigkeit fortlaufenden Nummer oder einer Zufallszahl versehene Anforderung an die Partner-Datenverarbeitungseinrichtung übermittelt, daß die Partner-Datenverarbeitungseinrichtung diese Kennung in ein die angeforderten Prüf- und/oder Referenzdaten beinhaltendes Prüfergebnistelegramm einfügt und dieses an die anfordernde Datenverarbeitungseinrichtung übermittelt und daß diese neben den von der Partner-Datenverarbeitungseinrichtung stammenden Prüf- und Referenzdaten auch die übermittelte Kennung auf Übereinstimmung mit der jeweils ausgesandten Kennung bewertet.

13. Einrichtung nach einem der Ansprüche 10 bis 12,
**dadurch gekennzeichnet,**
**daß** in jeder Datenverarbeitungseinrichtung das Triggern des eigenen Timers davon abhängig gemacht ist, daß innerhalb des anliegenden Prüfzyklus mindestens ein Prüfanstoß von der Partner-Datenverarbeitungseinrichtung empfangen wurde.

14. Einrichtung nach einem der Ansprüche 5 bis 13,
**dadurch gekennzeichnet,**
**daß** für jede Datenverarbeitungseinrichtung der durch ihre jeweilige exklusive Kennung modifizierte Freigabeschlüssel in dafür vorgesehenen RAM-Zellen hinterlegt ist.

15. Einrichtung nach einem der Ansprüche 5 bis 14,
**dadurch gekennzeichnet,**
**daß** die beiden Datenverarbeitungseinrichtungen beim Ablauf ihrer Ausfalloffenbarungszeit Störungsmeldungen an das jeweils angeschlossene geschützte bzw. öffentliche Datennetz übermitteln.

16. Einrichtung nach einem der Ansprüche 5 bis 15,
**dadurch gekennzeichnet,**
**daß** die Datenverarbeitungseinrichtungen in einem Raum mit Zugangsberechtigung untergebracht sind.

17. Einrichtung nach einem der Ansprüche 5 bis 16,
**dadurch gekennzeichnet,**
**daß** die Datenverarbeitungsanlage mindestens eine Datei zur Protokollierung der als signaltechnisch unbedenklich eingestuften Telegramme und Mittel zur mindestens mengenmäßigen Bewertung dieser Telegramme aufweist.

18. Einrichtung Nach einem der Ansprüche 5 bis 17,
**dadurch gekennzeichnet,**
**daß** der Datenverarbeitungsanlage und/oder den Datenverarbeitungseinrichtungen Fehlermeldedateien zur Protokollierung zurückgewiesener Telegramme zugeordnet sind.

## Claims

1. Method for protecting data processing systems which are relevant to safety against unintentional and unacceptable influence from other data networks to which the data processing system is connected via communications services, by applying a filter function according to which all telegrams which are not definitely detected as being satisfactory in terms of signalling equipment are deleted, **characterized by** the following features:
1) the data telegrams which are supplied via the communications services (D3) are filtered in at least two independent evaluation units (PC1, PC2) which are connected in series upstream of the safety-related data processing system (BLZ).
2) the telegrams are encrypted (V) in a first evaluation unit (PC1) and decrypted (E) again in the second evaluation unit (PC2) which follows in the direction of data transfer,
3) by means of the programs (F, VG) which are implemented in both evaluation units and, if appropriate, non-variable data (PD1, PD2), test data is formed at least indirectly and compared for correspondence with reference data which is stored in the evaluation units and/or test data and/or reference data which originates from the partner evaluation unit,
4) if a test is not successfully terminated within a defined failure disclosure time, the evaluation unit which has detected this is irreversibly switched off.

2. Method according to Claim 1, **characterized in that** when the test is not successfully terminated, the test is, if appropriate, repeated more than once until the failure disclosure time has expired.

3. Method according to Claim 1 or 2, **characterized in that**, when the data processing system is activated, a code (FS) is input as what is referred to as an enabling key into both evaluation units (PC1, PC2), the numerical value of which key is included in the calculation of the test data according to a predefined algorithm, **in that** identical enabling keys are predefined for the respectively interacting evaluation units, **in that** these enabling keys for each evaluation unit are logically linked to an exclusive code, **in that**, for the purpose of mutual testing of the programs and, if appropriate, different data, the exclusive code which is respectively taken into account is extracted from the test data again, and **in that** the enabling key is deleted if the test is not terminated successfully within the failure disclosure time.

4. Method according to Claim 3, **characterized in that** the enabling keys are input manually by an operator and the inclusion of the respective exclusive code in the input key by calculation which has been modified by a code and the extraction of this code from said input key by calculation are carried out by an automatic system.

5. Device for carrying out the method according to one of Claims 1 to 4, **characterized in that** data processing devices whose operating systems do not include any communications services at the manufacturer end and to which specified communications services (D1 to D3) are added only at the user end, or whose communications services are eliminated with the exception of specific communications services which can be selected by the user, are used for the evaluation units (PC1, PC2) **in that** each data processing device has reference memories for the test data formed by means of their programs (F, VG) and, if appropriate, non-variable data (PD), as well as devices for requesting and processing the data by means of the partner data processing device and for transmitting such data to the partner data processing device,
**in that** each data processing device has an encryption device (V) or decryption device (E) for the respectively supplied data telegrams which communicate with one another via an internal point-to-point connection (IV) which is disconnected from the outside, and
**in that** each data processing device has a timer which can be triggered when activation occurs and restarting occurs and when the testing of the programs and, if appropriate, non-variable data, has been terminated successfully, the switching time of which timer corresponds to the permitted maximum cycle sequencing time of the tests and which deletes the enabling key (FS) when the switching time which has been impressed on said timer has expired, and brings about the switching off of the associated data processing device.

6. Device according to Claim 5, **characterized in that** the program testing (ZP) includes the cyclical testing of at least the filter functions (F) and comparison functions (VF) of the individual data processing devices (PC1, PC2).

7. Device according to Claim 5 or 6, **characterized in that** at least two data processing systems (ST) which are each composed of two data processing devices (PC1, PC2) which are connected in series are provided for redundancy reasons, said data processing systems (ST) being disconnected from one another and operating independently, and **in that** coordination of the data processing systems is provided for the transfer of data telegrams into the protected region of the safety-related data processing system from the one system or the other.

8. Device according to Claim 7, **characterized in that** each data processing system has at least one interface assembly for connecting a public data network and a separate interface assembly for connecting the protected data network of the safety-related data processing system.

9. Device according to Claim 8, **characterized in that** in each case a plurality of different interface assemblies, which are possibly matched to different transmission protocols, are provided for the public network.

10. Device according to one of Claims 5 to 9, **characterized in that** each of the two data processing devices functions as a master data processing device and brings about the testing of their programs and, if appropriate, non-variable data, by means of test data and/or reference data which is determined by them themselves or stored in them and interrogated by the respective partner data processing device.

11. Device according to Claim 10, **characterized in that** in addition to the individual data processing devices' own reference data, possibly deviating reference data for the partner data processing device is also stored at the individual data processing devices, which data has to be transmitted, when required, to the respectively calling data processing device instead of the data processing devices' own reference data.

12. Device according to Claim 10 or 11, **characterized in that** each data processing device transmits, for the testing of its programs and, if appropriate, non-variable data, a request to the partner data processing device, which request is provided with a time stamp, a consecutive number according to a predefined rule or a random number, **in that** the partner data processing device inserts this code into a test result telegram which contains the requested test data and/or reference data and transmits said telegram to the requesting data processing device, and **in that** this data processing device evaluates both the test and reference data originating from the partner data processing device and the transmitted code for correspondence with the respectively emitted code.

13. Device according to one of Claims 10 to 12, **characterized in that** the triggering of each data processing device's own timer in each data processing device is made dependent on the fact that at least one test trigger from the partner data processing device has been received within the applied test cycle.

14. Device according to one of Claims 5 to 13, **characterized in that**, for each data processing device, the enabling key which is modified by its respective exclusive code is stored in RAM cells which are provided for that purpose.

15. Device according to one of Claims 5 to 14, **characterized in that** when the failure disclosure time of the two data processing devices has expired, said data processing devices transmit fault messages to the respectively connected protected or public data network.

16. Device according to one of Claims 5 to 15, **characterized in that** the data processing devices are accommodated in a space with access authorization.

17. Device according to one of Claims 5 to 16, **characterized in that** the data processing system has at least one file for logging the telegrams which are categorized as satisfactory in terms of signalling equipment, and means for these telegrams to be evaluated at least in terms of quantity.

18. Device according to one of Claims 5 to 17, **characterized in that** fault message files for logging rejected telegrams are assigned to the data processing system and/or the data processing devices.

## Revendications

1. Procédé pour cloisonner des installations de traitement de données relatives à la sécurité contre des influences involontaires et inadmissibles provenant d'autres réseaux de données avec lesquels l'installation de traitement de données est en liaison pour des services de communication, par l'application d'une fonction de filtrage dans laquelle sont effacés tous les télégrammes qui ne sont pas reconnus avec certitude comme non inquiétants du point de vue de la technique de signalisation,
**caractérisé par** les caractéristiques suivantes :
1) Les télégrammes de données fournis via les services de communication (D3) sont filtrés dans au moins deux unités d'observation indépendantes (PC1, PC2) branchées du côté amont de l'installation de traitement de données relative à la sécurité (BLZ) et branchées en série.
2) Les télégrammes sont cryptés (V) dans une première unité d'observation (PC1) et sont à nouveau décryptés (E) dans la deuxième unité d'observation (PC2) qui suit dans le sens du transfert des données.
3) Des données de test sont formées au moins indirectement par l'intermédiaire des programmes (F, VG) installés dans les deux unités d'observation et éventuellement de données invariables (PD1, PD2) et elles sont comparées à des données de référence enregistrées dans les unités d'observation et/ou à des données de test et/ou de référence provenant de l'unité d'observation partenaire pour vérifier si elles coïncident.
4) Si un test ne se termine pas avec succès dans les limites d'un temps de révélation de panne défini, l'unité d'observation qui a constaté ce fait est arrêtée de manière irréversible.

2. Procédé selon la revendication 1,
**caractérisé par le fait que** si le test s'est terminé sans succès, on répète le test éventuellement plusieurs fois jusqu'à l'expiration du temps de révélation de panne.

3. Procédé selon la revendication 1 ou 2,
**caractérisé par le fait que**,
lors de la mise en service de l'installation de traitement de données, on entre dans les deux unités d'observation (PC1, PC2) un identificateur (FS) comme clé dite de libération dont la valeur numérique entre selon un algorithme prédéterminé dans le calcul des données de test,
pour les unités d'observation respectivement coopérantes, on prescrit des clés de libération identiques,
on combine ces clés de libération avec un identificateur exclusif pour chaque unité d'observation,
pour le test mutuel des programmes et éventuellement des données invariables, on calcule à nouveau l'identificateur exclusif respectivement pris en compte à partir des données de test, et
lors d'un test ne se terminant pas avec succès dans les limites du temps de révélation de panne, on efface la clé de libération.

4. Procédé selon la revendication 3,
**caractérisé par le fait que** l'entrée de la clé de libération est effectuée à la main par un utilisateur et l'entrée par calcul de l'identificateur exclusif respectif dans la clé de libération modifiée par un identificateur ainsi que l'extraction par calcul de cet identificateur de la clé de libération modifiée par un identificateur sont effectuées de façon automatique.

5. Dispositif pour la mise en oeuvre du procédé selon l'une des revendications 1 à 4,
**caractérisé par le fait que**
pour les unités d'observation (PC1, PC2), on utilise des dispositifs de traitement de données dont les systèmes d'exploitation du côté du fabricant ne contiennent pas de service de communication et qui sont complétés seulement du côté de l'utilisateur par des services de communication spécifiques (D1 à D3) ou dont les services de communication, à l'exception de certains services de communication pouvant être sélectionnés par l'utilisateur, sont éliminés,
chaque dispositif de traitement de données comporte des mémoires de référence pour les données de test formées par l'intermédiaire de leurs programmes (F, VG) et éventuellement de leurs données invariables (PD) ainsi que des dispositifs pour la demande et le traitement des données par le dispositif de traitement de données partenaire ainsi que pour la transmission de données de ce type au dispositif de traitement de données partenaire,
chaque dispositif de traitement de données comporte un dispositif de cryptage (V) et un dispositif de décryptage (E) qui sont destinés aux télégrammes de données respectivement envoyés et qui communiquent entre eux par l'intermédiaire d'une liaison point à point interne (IV) séparée de l'extérieur, et
chaque dispositif de traitement de données comporte un temporisateur qui peut être déclenché lors de la mise en service et lors du redémarrage ainsi que lors d'un test, terminé avec succès, des programmes et éventuellement des données invariables, dont le temps de commutation correspond au temps de répétition de cycle maximal autorisé des tests et qui, à l'expiration du temps de commutation réglé, efface la clé de libération (FS) et provoque l'arrêt du dispositif de traitement de données associé.

6. Dispositif selon la revendication 5,
**caractérisé par le fait que** le test de programme (ZP) contient le test cyclique au moins des fonctions de filtrage et de comparaison (F, VG) des différents dispositifs de traitement de données (PC1, PC2).

7. Dispositif selon la revendication 5 ou 6,
**caractérisé par le fait qu'**il est prévu pour des raisons de redondance à chaque fois au moins deux systèmes de traitement de données (ST) qui sont constitués à chaque fois de deux dispositifs de traitement de données (PC1, PC2) branchés en série, qui sont séparés l'un de l'autre et qui travaillent de manière autonome et qu'il est prévu une coordination des systèmes de traitement de données pour ce qui est de la retransmission de télégrammes de données dans la zone protégée de l'installation de traitement de données relative à la sécurité à partir de l'un ou l'autre système.

8. Dispositif selon la revendication 7,
**caractérisé par le fait que** chaque système de traitement de données comporte au moins un module d'interface pour la connexion d'un réseau de données public ainsi qu'un module d'interface particulier pour la connexion du réseau de données protégé de l'installation de traitement de données relative à la sécurité.

9. Dispositif selon la revendication 8,
**caractérisé par le fait que**, en direction de réseaux publics, il est prévu à chaque fois plusieurs modules d'interface différents éventuellement adaptés à des protocoles de transmission différents.

10. Dispositif selon l'une des revendications 5 à 9,
**caractérisé par le fait que** chacun des deux dispositifs de traitement de données fait office de dispositif de traitement de données maître et provoque le test de ses programmes et éventuellement de ses données invariables à l'aide de données de test et/ou de référence déterminées par lui-même ou enregistrées en lui-même et demandées par le dispositif de traitement de données partenaire respectif.

11. Dispositif selon la revendication 10,
**caractérisé par le fait que**, dans les différents dispositifs de traitement de données, il est aussi enregistré, outre leurs propres données de référence, des données de référence éventuellement différentes pour le dispositif de traitement de données partenaire, ces dernières étant à transmettre si nécessaire à la place des propres données de référence au dispositif de traitement de données respectivement appelant.

12. Dispositif selon la revendication 10 ou 11,
**caractérisé par le fait que**, pour le test de ses programmes et éventuellement de ses données invariables, chaque dispositif de traitement de données transmet au dispositif de traitement de données partenaire une demande, munie d'un repère temporel, d'un numéro évoluant selon une règle prédéterminée ou d'un nombre aléatoire, que le dispositif de traitement de données partenaire insère cet identificateur dans un télégramme de résultat de test contenant les données de référence et/ou de test demandées et transmet ce télégramme au dispositif de traitement de données demandant et que celui-ci évalue outre les données de test et de référence provenant du dispositif de traitement de données partenaire l'identificateur transmis afin de détecter une coïncidence avec l'identificateur respectivement émis.

13. Dispositif selon l'une des revendications 10 à 12,
**caractérisé par le fait que**, dans chaque dispositif de traitement de données, le déclenchement du temporisateur particulier dépend du fait qu'au moins une incitation au test a été reçue ou non du dispositif de traitement de données partenaire pendant le cycle de test présent.

14. Dispositif selon l'une des revendications 5 à 13,
**caractérisé par le fait que**, pour chaque dispositif de traitement de données, la clé de libération modifiée par son identificateur exclusif respectif est enregistrée dans des cellules de RAM prévues à cet effet.

15. Dispositif selon l'une des revendications 5 à 14,
**caractérisé par le fait que**, à l'expiration de leur temps de révélation de panne, les deux dispositifs de traitement de données transmettent des messages d'erreur au réseau de données, protégé ou public, respectivement connecté.

16. Dispositif selon l'une des revendications 5 à 15,
**caractérisé par le fait que** les dispositifs de traitement de données sont placés dans une pièce avec autorisation d'accès.

17. Dispositif selon l'une des revendications 5 à 16,
**caractérisé par le fait que** l'installation de traitement de données comporte au moins un fichier pour faire un relevé des télégrammes classés comme non inquiétants du point de vue de la technique de signalisation et des moyens pour l'évaluation au moins quantitative de ces télégrammes.

18. Dispositif selon l'une des revendications 5 à 17,
**caractérisé par le fait que** des fichiers de messages d'erreurs pour le relevé de télégrammes rejetés sont associés à l'installation de traitement de données et/ou aux dispositifs de traitement de données.
